(19) Europäisches Patentamt European Patent Office Office européen des brevets

(11) **EP 4 597 412 A1**

(12) **EUROPEAN PATENT APPLICATION**
published in accordance with Art. 153(4) EPC

(43) Date of publication:
**06.08.2025 Bulletin 2025/32**

(51) International Patent Classification (IPC):
**G06T** (2006.01)

(21) Application number: 24875708.0

(22) Date of filing: **02.07.2024**

(86) International application number:
**PCT/CN2024/103071**

(87) International publication number:
**WO 2025/077307 (17.04.2025 Gazette 2025/16)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **11.10.2023 CN 202311316210**

(71) Applicants:
• **Zhongtian Power Optical Cable Co., Ltd.**
  **Nantong, Jiangsu 226000 (CN)**
• **Jiangsu Zhongtian Technology Co., Ltd.**
  **Nantong, Jiangsu 226000 (CN)**

(72) Inventors:
• **WU, Mingnian**
  **Nantong, Jiangsu 226000 (CN)**
• **CHEN, Qingqing**
  **Nantong, Jiangsu 226000 (CN)**
• **WANG, Daogen**
  **Nantong, Jiangsu 226000 (CN)**
• **LI, Songlin**
  **Nantong, Jiangsu 226000 (CN)**
• **QIN, Xinfeng**
  **Nantong, Jiangsu 226000 (CN)**
• **ZHANG, Tianyi**
  **Nantong, Jiangsu 226000 (CN)**

(74) Representative: **Metida**
  **Gyneju str. 16**
  **01109 Vilnius (LT)**

(54) **ICING THICKNESS MEASUREMENT METHOD AND APPARATUS, ELECTRONIC DEVICE, AND STORAGE MEDIUM**

(57)    The present application relates to a field of power transmission line detection, and specifically relates to an ice coating thickness detection method, an apparatus, an electronic device and a storage medium. The ice coating thickness detection method includes: acquiring an ice coating image of a power transmission line; inputting the ice coating image into a pre-trained ice coating semantic extraction model to obtain ice coating semantic information of the power transmission line; determining an ice coating contour of the power transmission line based on the ice coating semantic information; determining an ice coating thickness of the power transmission line based on the ice coating contour. The embodiments of the present application can not only detect the ice coating thickness without power outage, but also simplify hardware devices required for ice coating thickness detection and reduce the maintenance cost and difficulty of the hardware devices.

An ice coating image of a power transmission line is acquired — 201

The ice coating image is inputted into a pre-trained ice coating semantic extraction model to obtain ice coating semantic information of the power transmission line — 202

The ice coating contour of the power transmission line is determined according to the ice coating semantic information — 203

The ice coating thickness of the power transmission line is determined according to the ice coating contour — 204

**FIG. 2**

**Description**

The present application requires a priority of a Chinese patent application filed with the Chinese Patent Office on October 11, 2023, with application number 202311316210.7 and entitled "ICE COATING THICKNESS DETECTION METHOD, APPARATUS, ELECTRONIC DEVICE, AND STORAGE MEDIUM", the entire contents of the Chinese patent application are incorporated by reference in the present application.

FIELD

The subject matter herein generally relates to a field of power transmission line detection, and in particular, to a method, an apparatus, an electronic device, and a storage medium for detecting ice coating thickness.

BACKGROUND

Power line icing refers to a situation where power lines within a certain range are covered with ice. Power line icing may cause problems such as conductor galloping, tower tilting and collapse, line breakage, and insulator flashover, which may bring great inconvenience to production and life, and may also cause huge economic losses.

At present, a detection of icing states of power transmission lines in the related technologies is beneficial for dealing with iced power transmission lines before icing disasters occurs. For example, an ice melting device can be activated to effectively prevent the occurrence of icing disasters. When detecting an ice coating thickness, tension sensors or other devices can be installed on conductor lines and ground lines of the power transmission lines to measure values such as tension value of insulators, inclination angles of insulators, stress values of conductors, and galloping values of conductors. Then, the current ice coating thickness of the power transmission lines can be determined through a relational algorithm between these measured values and the ice coating thickness.

However, the sensors used in the above-mentioned measurement methods of the related technologies are complex to install. During installation, power outage may even be required, which affects a normal operation of the power transmission lines. Moreover, a maintenance cost and difficulty are also relatively high.

SUMMARY

Accordingly, embodiments of this application provide an ice coating thickness detection method, an electronic equipment, an ice coating thickness detection apparatus, and a storage medium, to reduce an installation complexity of hardware devices, a maintenance cost and maintenance difficulty while being able to accurately detect the ice coating thickness.

First aspect of this application provides the ice coating thickness detection method, the method includes: acquiring an ice coating image of a power transmission line; inputting the ice coating image into a pretrained ice coating semantic extraction model to obtain ice coating semantic information of the power transmission line; determining an ice coating contour of the power transmission line according to the ice coating semantic information; and determining an ice coating thickness of the power transmission line according to the ice coating contour.

The embodiment of the present application extracts the ice coating semantic information of the power transmission line based on the ice coating image, so as to obtain the ice coating contour of the power transmission line. The ice coating thickness of the power transmission line can be obtained based on the ice coating contour. There is no need to install sensors for measuring values such as the tension values of the power transmission line. Thus, the ice coating thickness can be detected without a need of power outage, and the hardware devices required for ice coating thickness detection are also be simplified, reducing the installation complexityf the hardware devices, the maintenance cost and maintenance difficulty of the power transmission line.

In one embodiment, the ice coating semantic extraction model includes a meteorological analysis model and a semantic segmentation model, inputting the ice coating image into a pre-trained ice coating semantic extraction model to obtain ice coating semantic information of the power transmission line includes: acquiring micro-meteorological data matching with a capture time of the ice coating image; inputting the micro-meteorological data into the meteorological analysis model to obtain weather information at the time when the ice coating image was captured; detecting whether the weather information at the time when the ice coating image was captured meets an ice coating meteorological condition; and inputting the ice coating image into the semantic segmentation model to obtain the ice coating semantic information of the power transmission line when the weather information meets the ice coating meteorological condition.

Furthermore, by inputting the ice coating image into the pre-trained ice coating semantic extraction model, the ice coating semantic information can be obtained, which makes an acquisition of the ice coating semantic information more accurate and reliable and helpfully simplifies the hardware devices required for ice coating thickness detection.

In one embodiment, training methods of the ice coating semantic extraction model includes: acquiring ice coating image samples and micro-meteorological data samples; obtaining a first loss function value corresponding to a current semantic segmentation model according the ice coating image samples and the current semantic segmentation model; obtaining a second loss function value corresponding to a current meteorological analysis model according to the micro-meteorological data samples and the current meteorological analysis model; obtaining a total loss function value of the ice coating semantic extraction model according to the first loss function value and the second loss function value; adjusting model parameters of the current semantic segmentation model and the current meteorological analysis model to obtain an adjusted ice coating semantic extraction model when the ice coating semantic extraction model is determined to be not converged according to the total loss function value; and continuing to train the adjusted ice coating semantic extraction model until the ice coating semantic extraction model converges.

Furthermore, by training the ice coating semantic extraction model, an accuracy of the ice coating semantic extraction model for extracting ice coating semantic information can be improved.

In one embodiment, the ice coating semantic extraction model comprises a first feature pyramid and a second feature pyramid; the first feature pyramid is configured for performing multiple downsampling operations on the ice coating image to obtain a first matrix; and the second feature pyramid is configured for performing multiple upsampling operations on the first matrix to obtain the ice coating semantic information.

Furthermore, multiple samplings of the ice coating image by the first feature pyramid and the second feature pyramid can make the obtained ice coating semantic information more reliable.

In one embodiment, the ice coating contour includes a first contour line and a second contour line along the power transmission line, and determining the ice coating thickness of the power transmission line according to the ice coating contour includes: searching for a first position on the first contour line and a second position on the second contour line, wherein a distance between the first position and the second position is a shortest distance between the first contour line and the second contour line; determining an ice coating diameter of the power transmission line according to the first position and the second position; and determining the ice coating thickness according to the ice coating diameter and a diameter of the power transmission line.

Furthermore, determining the ice coating thickness of the power transmission line according to the first contour line and the second contour line of the power transmission line makes the determination of the ice coating thickness of the power transmission line more standardized, and the ice coating thickness can be detected without the need of power outage.

In one embodiment, determining the ice coating diameter of the power transmission line according to the first position and the second position includes: obtaining a first adjacent point set, wherein the first adjacent point set comprises the first position and a plurality of positions adjacent to the first position on the first contour line; calculating shortest distances between each position of the first adjacent point set and the second contour line to obtain a plurality of distance values; and determining the ice coating diameter of the power transmission line according to the plurality of distance values.

Furthermore, by calculating multiple distance values between the first position and the second position to determine the ice coating diameter of the power transmission line, the determination of the ice coating thickness of the power transmission line becomes more accurate, reducing an influence of calculating error.

In one embodiment, determining the ice coating contour of the power transmission line according to the ice coating semantic information includes: performing a binarization processing on the ice coating semantic information to obtain a binarized image; and extracting the ice coating contour of the power transmission line from the binarized image.

Furthermore, By performing binarization processing on the ice coating semantic information, the image contrast can be enhanced, making the ice coating contour of the transmission line extracted from the binarized image more accurate.

Second aspect of this application provides the ice coating thickness detection apparatus, the apparatus includes: an acquiring module configured for acquiring an ice coating image of a power transmission line; an extracting module configured for inputting the ice coating image into a pre-trained ice coating semantic extraction model to obtain ice coating semantic information of the power transmission line; and a calculating module configured for determining an ice coating contour of the power transmission line according to the ice coating semantic information, and determining an ice coating thickness of the power transmission line according to the ice coating contour.

Third aspect of this application provides the electronic device, the electronic device include a processors and a storage medium, the storage medium is configured to store instructions, the processor is configured to call the instructions stored in the storage medium, to cause the electronic device to execute the the storage medium is configured to store instructions, the processor is configured to call the instructions stored in the storage medium, to cause the electronic device to execute the above-mentioned ice coating thickness detection method.

Fourth aspect of this application provides a computer-readable storage medium, the computer-readable storage medium stores computer instructions, when the computer instructions run on an electronic device, the electronic device is caused to execute the above-mentioned ice coating thickness detection method.

BRIEF DESCRIPTION OF THE DRAWINGS

FIG. 1 is a scenario diagram illustrating an ice coating thickness detection system according to an embodiment of the present application.

FIG. 2 is a flowchart diagram illustrating an ice coating thickness detection method according to an embodiment of the present application.

FIG. 3 is a network structure diagram illustrating a semantic segmentation model according to an embodiment of the present application.

FIG. 4 is a network structure diagram illustrating a meteorological analysis model according to an embodiment of the present application.

FIG. 5 is a flowchart diagram illustrating training methods of an ice coating semantic extraction model according to an embodiment of the present application.

FIG. 6 is a schematic diagram of contour lines of an ice coating contour according to an embodiment of the present application.

FIG. 7 is a flowchart diagram of sub-blocks of block 204 according to an embodiment of the present application.

FIG. 8 is a block diagram of an ice coating thickness detection apparatus according to an embodiment of the present application.

FIG. 9 is a block diagram of an electronic device according to an embodiment of the present application.

DETAILED DESCRIPTION

In order to more clearly understand the above purposes, features and advantages of the present application, the present application is described in detail below in conjunction with the drawings and the description of embodiments. It is understood that, embodiments of the present application and features in the embodiments may be combined with each other without conflict.

In the following description, many specific details are described in order to fully understand the present application, the described embodiments are only part of the present application, not all embodiments.

Unless otherwise defined, all technical and scientific terms used herein have the same meaning as those commonly understood by those skilled in the technical art of the present application. The terms used herein in the description of the present application are only for a purpose of describing the embodiments, and are not intended to limit the present application.

It should be further noted that, the term "including", "comprising" or any other variation thereof is intended to cover non-exclusive inclusions, so that a process, a method, an article or an apparatus including a series of elements includes not only those elements, but also includes other elements not expressly listed, or also includes elements inherent in such process, method, article or device. Without further restrictions, an element limited by the statement "including a..." does not exclude ab existence of another identical element in the process, method, article or apparatus including the element.

In the present application, "at least one" refers to one or more, "multiple/a plurality of" refers to two or more than two. "and/or", describing the association relationship of the associated object, indicates that there may be three relationships, for example, A and/or B may mean: the existence of A alone, the existence of A and B at the same time, the existence of B alone, where A, B can be singular or plural. The terms "first", "second", "third", "fourth" etc. (if exist) in the embodiments, claims, and drawings of the present application are used to distinguish similar objects, and are not used to describe a specific order or sequence.

In an embodiment of the present application, the words "for example" or "such as" are used to indicate as examples, illustrations or illustrations. Any embodiment or design described as "for example" or "such as" of the present application shall not be construed as being preferred or more advantageous than other embodiments or designs. The use of words such as "for example" or "such as" is intended to present a concept in a concrete way.

The embodiments of the present application provide an ice coating thickness detection method, an ice coating thickness detection apparatus, an electronic device 101, and a computer-readable storage medium, which will be described in detail below respectively.

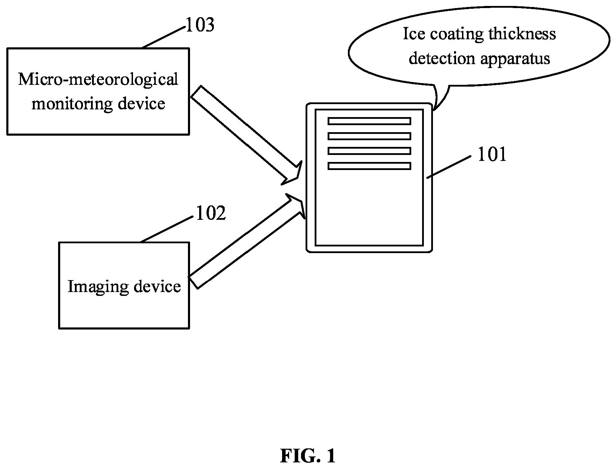

Referring to FIG. 1, which shows a scenario diagram of an ice coating thickness detection system provided by an embodiment of the present application.

The ice coating thickness detection system may include an electronic device 101 and an imaging device 102, The electronic device 101 can integrates the ice coating thickness detection apparatus. The electronic device 101 is communicated with to the imaging device 102.

The imaging device 102 is configured to capture ice coating images of power transmission lines and transmit the ice coating images to the electronic device 101. The imaging device 102 can be a camera or other device with imaging and/or photography functions.

The electronic device 101 can be configured to obtain the ice coating images of the power transmission lines, input the ice coating images into a pre-trained ice coating semantic extraction model to obtain ice coating semantic information of the power transmission lines, determine ice coating contours of each of the power transmission lines according to the ice coating semantic information, and determine the ice coating thickness of each of the power transmission lines according to the ice coating contours.

The electronic device 101 may be a device capable of automatically performing numerical calculations and/or information processing according to pre-set or pre-stored instructions. Hardwares of the electronic device 101 includes but is not limited to processors, Microprogrammed Control Units (MCU), Application Specific Integrated Circuits (ASIC), Field-Programmable Gate Arrays (FPGA), Digital Signal Processors (DSP), embedded devices, etc. The electronic device 101 may be a personal computer, a server, etc.

Those skilled in the art can understand that the application environment shown in FIG.1 is one application scenario of the present application and does not constitute a limitation on the application scenarios of the present application. Other application environments may include more or fewer devices/equipment than shown in FIG. 1. For example, FIG. 1 only shows one electronic device 101 and one imaging device 102. It can be understood that the ice coating thickness detection system may also include one or more other devices, the one or more other device can be imaging devices 102 or devices with other functions, which is not specifically limited here.

Moreover, as shown in FIG. 1, the ice coating thickness detection system may also include a micro-meteorological monitoring device 103 communicated with the electronic device 101. The micro-meteorological monitoring device 103 can be configured to collect micro-meteorological data from an environment where the power transmission line is located, and transmit the collected micro-meteorological data to the electronic device 101, enabling the electronic device 101 to determine the ice coating thickness by combining the micro-meteorological data.

Micro-meteorology may refer to small-scale changes in meteorological elements in the near-surface atmospheric layer and upper soil layer caused by certain structural features (such as micro-topography). The Micro-meteorological data may include temperature, humidity, wind speed, wind direction, atmospheric pressure, rainfall, and illumination, but is not limited to these.

In one embodiment, the micro-meteorological monitoring device 103 may include micro-meteorological sensors.

The imaging device 102, the micro-meteorological monitoring device 103, etc., can use solar power supply to achieve long-term ice coating thickness detection without human supervision.

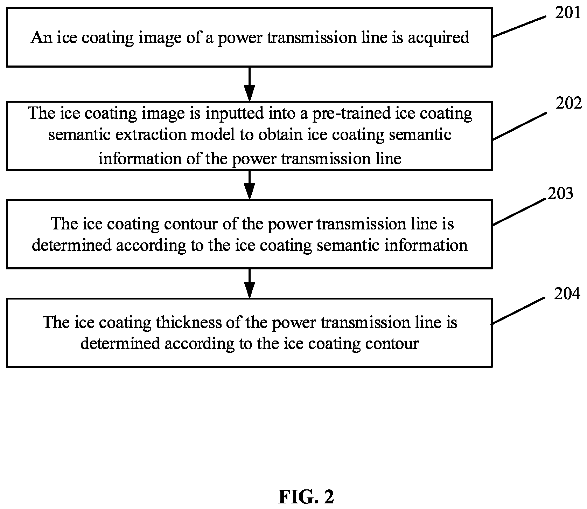

Referring to FIG. 2, which shows a flowchart of the ice coating thickness detection method provided by an embodiment of the present application. The ice coating thickness detection method can be applied to the electronic device 101.

It can be understood that the order of blocks in this flowchart can be changed and some blocks can be omitted according to different requirements.

As shown in FIG. 2, the ice coating thickness detection method may include the following blocks.

In block 201: an ice coating image of a power transmission line is acquired.

For example, the electronic device 101 can acquire the ice coating image of the power transmission line from the imaging device 102.

In some embodiments, after acquiring the ice coating image, image enhancement, spatial filtering, and other preprocessing operations can be performed on the ice coating image before executing block 202, to facilitate subsequent processing by the ice coating semantic extraction model.

In block 202: the ice coating image is inputted into a pre-trained ice coating semantic extraction model to obtain ice coating semantic information of the power transmission line.

The ice coating semantic information may represent areas in the ice coating image where ice coating phenomena exist on the power transmission line.

In some embodiments, the ice coating semantic extraction model may include a semantic segmentation model.

For example, the semantic segmentation model may be U-shaped Network (U-Net), Fully Convolutional Network (FCN), Segmentation Network (SegNet) model, etc., but is not limited to these.

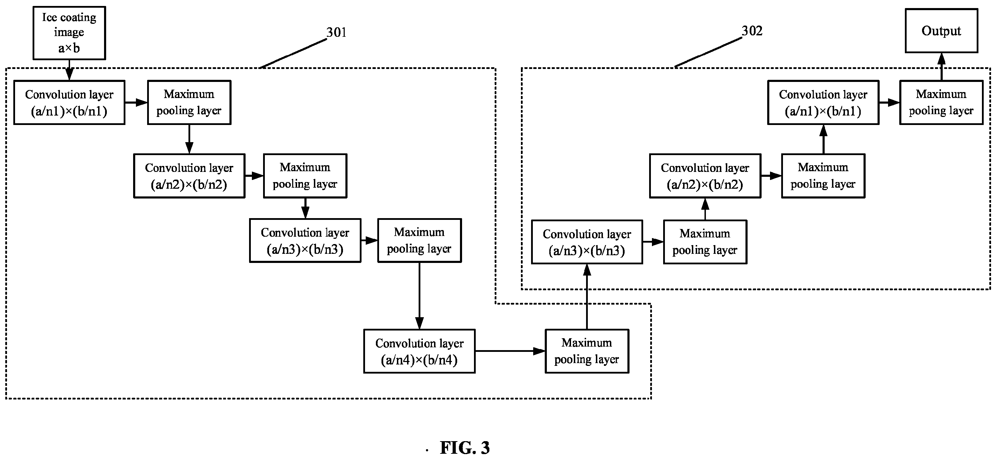

Referring to FIG. 3, which shows a network structure diagram of the semantic segmentation model provided by an embodiment of the present application.

The semantic segmentation model may include a first feature pyramid 301 and a second feature pyramid 302. The first feature pyramid 301 is configured to perform multiple downsampling operations on the ice coating image to obtain a first matrix. The second feature pyramid 302 is configured to perform multiple upsampling operations on the first matrix to obtain ice coating semantic extraction information.

The first feature pyramid 301 may include a plurality of groups of convolution layers and maximum pooling layers, each group of convolution layers and maximum pooling layers is configured to perform one downsampling operation. The second feature pyramid 302 may also includes a plurality of groups of convolution layers and maximum pooling layers, each group of convolution layers and maximum pooling layers is configured to perform one upsampling operation.

In one embodiment, a scaling ratio of upsampling in the second feature pyramid 302 is an anti-symmetric coefficient of a scaling ratio of downsampling in the first feature pyramid 301. That is, the scaling ratio of the first upsampling operation in the second feature pyramid 302 is reciprocal to the scaling ratio of the last downsampling operation in the first feature pyramid 301. For example, if the scaling ratio of the last downsampling operation in the first feature pyramid 301 is 1:2, then the scaling ratio of the first upsampling operation in the second feature pyramid 302 is 2:1; the scaling ratio of the second upsampling operation in the second feature pyramid 302 is reciprocal to the scaling ratio of the second-to-last downsampling operation in the first feature pyramid 301, and so on.

For example, referring to FIG. 3, if a **length and width of the ice coating image are denoted as a×b, and** assuming the scaling ratios for multiple downsampling operations on the ice coating image by the first feature pyramid 301 are {1:4, 1:2, 1:2, 1:2}, then n1 equals 4, n2 equals 8, n3 equals 16, and n4 equals 32. That is, the first **feature pyramid 301 performs multiple downsampling operations resulting in matrix sizes of {(a/4)×(b/4), (a/8)×(b/8), (a/16)×(b/16), (a/32)×(b/32)}.** A size of **the first matrix is (a/32)×(b/32). The second feature pyramid** 302 performs multiple upsampling operations on the first matrix with scaling ratios of {2:1, 2:1, 2:1}, resulting in **matrix sizes of {(a/16)×(b/16), (a/8)×(b/8), (a/4)×(b/4)}.**

In other embodiments, the ice coating semantic extraction model may include a meteorological analysis model and a semantic segmentation model.

In one embodiment, block 202 may further include: acquiring micro-meteorological data matching with the capture time of the ice coating image, such as micro-meteorological data measured at the time of image capture, or measured within a preset time period containing the image capture time, then, inputting the micro-meteorological data into the meteorological analysis model to obtain weather information, and obtaining ice coating semantic information according to the weather information, the ice coating image, and the semantic segmentation model.

The weather information can describe climate conditions, such as temperature and humidity in the environment where the power transmission line is located. For example, the weather information may include sunny, rainy, snowy, etc.

The electronic device can verify whether the power transmission line is under climate conditions conducive to ice coating phenomena (i.e., ice coating meteorological conditions) based on the weather information, thereby validating a correctness of extracted ice coating semantic information. The ice coating meteorological conditions can be set according to actual environmental factors such as altitude, air pressure, region, or other practical requirements. The embodiments of the present application do not limit this.

If the weather information meets the ice coating meteorological conditions, such as indicating sub-zero temperatures and high humidity during snowy weather, it suggests a high probability of ice coating on the power transmission line. This indicates that correct ice coating semantic information can be extracted based on the ice coating image and the semantic segmentation model, and thus the ice coating thickness can be determined based on the ice coating semantic information by proceeding to block 203.

If the weather information does not meet the ice coating meteorological conditions, such as indicating temperatures above thirty degrees during sunny weather with abundant sunlight, it suggests that ice coating on the power transmission line is unlikely. This indicates that the ice coating semantic information extracted based on the ice coating image and semantic segmentation model might be incorrect, for example, due to light reflection.

In some embodiments, obtaining ice coating semantic information according to the weather information, the ice coating image, and the semantic segmentation model may include: detecting whether the weather information at the time when the ice coating image was taken meets the ice coating meteorological conditions, if the weather information at the time when the ice coating image was taken meets the ice coating meteorological conditions, inputting the ice coating image into the semantic segmentation model to obtain the ice coating semantic information.

If the weather information at the time when the ice coating image was taken does not meet the ice coating meteorological conditions, the calculation of the ice coating thickness may be omitted.

The embodiments of the present application use micro-meteorological data to determine whether an ice coating phenomenon occurs on the power transmission line, so as to determine whether the ice coating semantic information can be accurately extracted from the ice coating image, improve a reliability of the ice coating semantic information, and further improve an accuracy of the ice coating thickness calculation.

Furthermore, multiple samplings of the ice coating image by the first feature pyramid and the second feature pyramid can make the obtained ice coating semantic information more reliable.

The above-mentioned meteorological analysis model is configured to obtain the weather information based on the micro-meteorological data. The meteorological analysis model may be a Convolutional Neural Network (CNN) model.

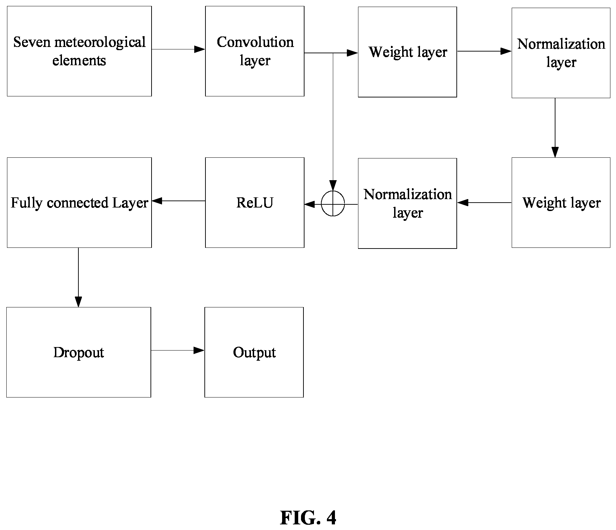

For example, as shown in FIG. 4, which is a structural diagram of the meteorological analysis model provided in an embodiment of the present application.

Seven meteorological elements shown in FIG. 4 include micro-meteorological data: temperature, humidity, wind speed, wind direction, atmospheric pressure, rainfall, and illumination. The electronic device 101 can input the seven meteorological elements into the meteorological analysis model shown in FIG. 3 to obtain the weather information.

In a practical application, data types of the micro-meteorological data inputted into the meteorological analysis model can be set according to actual application requirements, and the embodiments of the present application do not limit this.

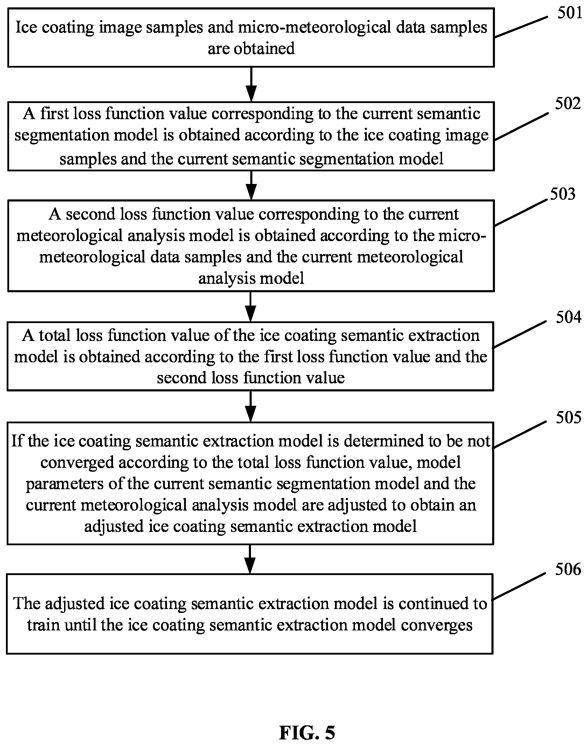

In some embodiments, as shown in FIG. 5, training methods of the ice coating semantic extraction model may include following blocks.

In block 501, ice coating image samples and micro-meteorological data samples are obtained.

The ice coating image samples are annotated with ice coating contours that form closed loops. Pixels within and on the ice coating contour are labeled as positive samples, while pixels outside the contour are labeled as negative samples.

The micro-meteorological data samples may include sets of micro-meteorological data, such as seven meteorological elements and their corresponding labels, and the weather information (e.g., sunny, rainy, or snowy).

In block 502: a first loss function value corresponding to the current semantic segmentation model is obtained according to the ice coating image samples and the current semantic segmentation model.

For example, when a pixel in the ice coating image sample is labeled as a positive sample, its corresponding loss function $f_{11}$ is:

$$f_{11} = -(1-p)^\gamma \log p;$$

where p is a **predicted probability of the pixel belonging to positive or negative samples**; $\gamma$ is a hyperparameter of the semantic segmentation model.

When the pixel is labeled as a negative sample, its corresponding loss function $f_{12}$ is:

$$f_{12} = -p^\gamma \log p;$$

where p is the **predicted probability of the pixel belonging to positive or negative samples**; $\gamma$ **is** the hyperparameter in the semantic segmentation model.

A loss function F1 of the semantic segmentation model is:

$$F1 = \Sigma \alpha w_i f_{11} + (1-\alpha) f_{11};$$

where $w_i$ is a weight parameter, $w_i = (N-N_i)/N$, N is the total number of pixels in the ice coating image, $N_i$ is the number of pixels labeled as category i in the ice coating image sample, category i refers to positive or negative samples, $\alpha$ =1 when the pixel is a positive sample, and $\alpha$=0 when the pixel is a negative sample.

In block 503: a second loss function value corresponding to the current meteorological analysis model is obtained according to the micro-meteorological data samples and the current meteorological analysis model.

For example, referring to FIG. 4, the meteorological analysis model can be a CNN formed by convolutional layers, weight layers, normalization layers, rectified linear unit (ReLU), fully connected layers, and dropout layers.

The second loss function F2 of the meteorological analysis model is:

$$F2 = 1-\exp(-(x-y)^2/x^2);$$

where x is a label in the micro-meteorological data sample, y is an output data of the meteorological analysis model (i.e., predicted weather information), and exp is an exponential function.

In block 504: a total loss function value of the ice coating semantic extraction model is obtained according to the first loss function value and the second loss function value.

The total loss function F is:

$$F = \theta F1 + \beta F2;$$

where $\theta$ is a **weight of the first loss function F1, and** $\beta$ **is** a weight of the second loss function F2. The **values of** $\theta$ **and** $\beta$ **can be set according to actual application requirements.**

In block 505: if the ice coating semantic extraction model is determined to be not converged according to the total loss function value, model parameters of the current semantic segmentation model and the current meteorological analysis model are adjusted to obtain an adjusted ice coating semantic extraction model.

In block 506: the adjusted ice coating semantic extraction model is continued to train until the ice coating semantic extraction model converges.

That is, blocks 501 to 505 can be repeatedly executed until the ice coating semantic extraction model converges.

In the embodiments of the present application, the meteorological analysis model and the semantic segmentation model are trained together, which can comprehensively consider characteristics of the micro-meteorological data and the ice coating images, and improve the accuracy of extracting the ice coating semantic information.

After obtaining the ice coating semantic information, block 203 can be further executed.

In block 203: the ice coating contour of the power transmission line is determined according to the ice coating semantic information.

In some embodiments, block 203 may further include: performing binarization processing on the ice coating semantic information to obtain a binarized image; and extracting the ice coating contour of the power transmission line from the binarized image.

The ice coating contour may also be texture information of the ice coating semantic information.

For example, the ice coating contour of the power transmission line can be obtained through an image binarization algorithm. The image binarization algorithm can be a mean value method, a bimodal method, an otsu algorithm, etc., but is not limited these.

In block 204: the ice coating thickness of the power transmission line is determined according to the ice coating contour.

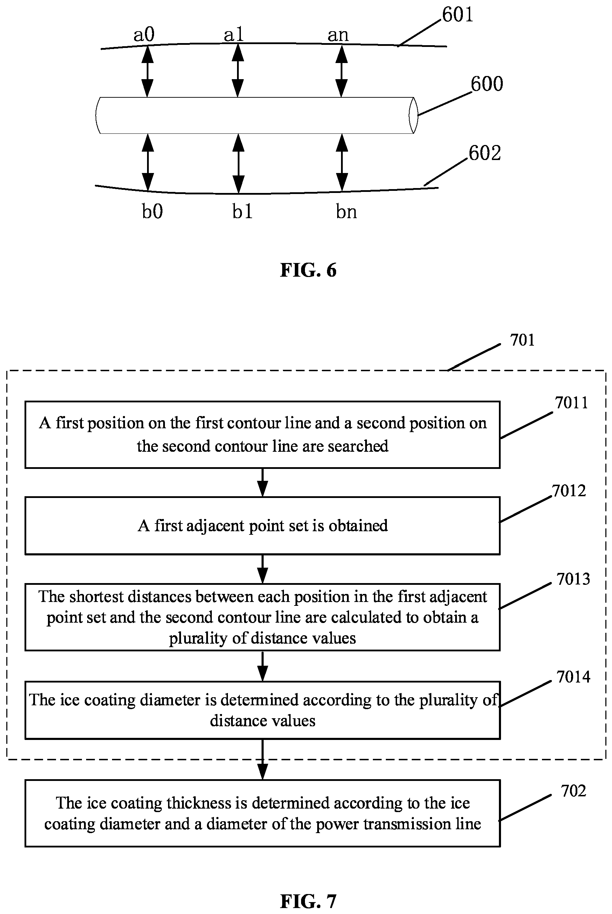

As shown in FIG. 6, the ice coating contour may include a first contour line 601 and a second contour line 602 along the power transmission line 600.

In some embodiments, as shown in FIG. 7, block 204 may further include following blocks.

In block 701: an ice coating diameter of the power transmission line is determined according to the first contour line and the second contour line.

In some embodiments, block 701 may further include: defining the shortest distance between the first contour line 601 and the second contour line 602 as the ice coating diameter of the power transmission line 600.

In some embodiments, block 701 may further include: defining the longest distance between the first contour line 601 and the second contour line 602 as the ice coating diameter of the power transmission line 600.

In some embodiments, block 701 may further include following blocks.

In block 7011: a first position on the first contour line and a second position on the second contour line are searched.

In one embodiment, the distance between the first position and the second position is the shortest distance between the first contour line 601 and the second contour line 602.

For example, depth-first search algorithm or breadth-first search algorithm can be configured to search the first position and the second position.

Then, the ice coating diameter of the power transmission line 600 can be determined based on the first position and the second position. For example, blocks 7012 to 7014 can be executed.

In block 7012: a first adjacent point set is obtained.

The first adjacent point set includes the first position and a plurality of positions adjacent to the first position on the first contour line 601.

In some embodiments, a plurality of contour points near the first position can be uniformly selected on the first contour line 601 as the plurality of positions adjacent to the first position. For example, positions that are 5 pixels, 10 pixels, and 15 pixels apart from the first position can be selected as the plurality of positions adjacent to the first position.

In block 7013: the shortest distances between each position in the first adjacent point set and the second contour line are calculated to obtain a plurality of distance values.

For example, referring again to FIG. 6, assuming the first position is denoted as a0, and the first adjacent point set X={a0, a1, ..., an}, positions corresponding to the shortest distances from each position in the set X to the second contour line 602 can be found, denoted as set Y={b0, b1, ..., bn}. The plurality of distance values are the distances between a0 and b0, a1 and b1, ..., and an and bn.

In block 7014: the ice coating diameter is determined according to the plurality of distance values.

In some embodiments, the average of the plurality of distance values can be calculated as the ice coating diameter, or the average can be calculated after removing the highest and lowest values from the plurality of distance values.

In other embodiments, a mode or a median vlaue of the plurality of distance values can be selected as the ice coating diameter.

In block 702: the ice coating thickness is determined according to the ice coating diameter and a diameter of the power transmission line.

For example, denoting the ice coating diameter as Z and the diameter of power transmission line 600 as d, thus the ice coating thickness is (Z-d)/2.

The embodiments of the present application can detect the ice coating thickness according to the ice coating images. By extracting the ice coating semantic information of the power transmission line 600, the ice coating contour can be obtained and the ice coating thickness can be determined. This eliminates the need to install sensors for measuring values such as tension values of the power transmission line, enabling ice coating thickness detection without power outage, simplifying hardware devices required and reducing maintenance complexity.

In addition, by calculating the plurality of distance values between the first position and the second position, and determining the ice coating diameter of the power transmission line using the median value or the average vlaue, the determination of the ice coating thickness of the power transmission line becomes more accurate and reasonable.

Moreover, through the binarization processing of the ice coating semantic information, the ice coating contour of the power transmission line extracted from the binarized image is made more precise.

Moreover, by combining the micro-meteorological data and considering an impact of the weather information on ice coating thickness, the embodiments can avoid mis-identification of ice coating contours due to factors, such as sunlight reflection, improving the accuracy of ice coating thickness calculation.

Based on the same concept as the ice coating thickness detection method in the above embodiments, the present application also provides an ice coating thickness detection apparatus, which can be used to execute the above-mentioned ice coating thickness detection method. For the convenience of description, in a structural diagram of the embodiment of the ice coating thickness detection apparatus, only the parts related to the embodiments of the present application are shown. Those skilled in the art can understand that the illustrated structure does not constitute a limitation to the apparatus, and it may include more or fewer components than those shown in the figure, or combine certain components, or have different component arrangements.

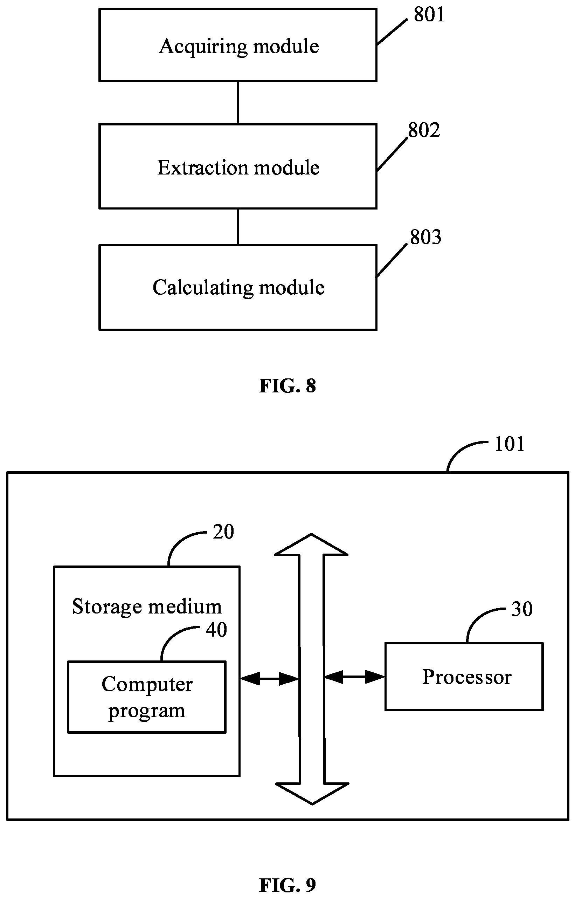

As shown in FIG. 8, the ice coating thickness detection apparatus includes an acquiring module 801, an extraction module 802, and a calculating module 803. In some embodiments, the above-mentioned modules may be programmable software instructions stored in a storage medium and callable and executable by a processor. It can be understood that, in other implementation manners, the above-mentioned modules may also be program instructions or firmware solidified in the processor.

The acquiring module 801 is configured for acquiring an ice coating image of a power transmission line.

The extracting module 802 is configured for inputting the ice coating image into a pre-trained ice coating semantic extraction model to obtain ice coating semantic information of the power transmission line.

The calculating module 803 is configured for determining an ice coating contour of the power transmission line according to the ice coating semantic information, and determining an ice coating thickness of the power transmission line according to the ice coating contour.

FIG. 9 illustrates a structural diagram of an electronic device 101 in accordance with an embodiment of the present application.

As shown in FIG. 9, the electronic device 101 may include a storage medium 20 and a processor 30. The storage medium 20 is configured to store one or more computer programs 40 that can be executed by the processor 30. When the processor 30 executes the computer program 40, the blocks of the embodiments of the above-mentioned ice coating thickness detection method can be implemented, such as blocks 201 to 204 shown in FIG. 2.

Exemplarily, the computer program 40 can also be divided into one or more modules/units. The one or more modules/units can be stored in the storage medium 20 and executed by the processor 30. The one or more modules/units can be a series of computer program instruction segments capable of completing specific functions, and the instruction segments are configured to describe the execution process of the computer program 40 in the electronic device 101. For example, it can be divided into the acquiring module 801, the extraction module 802, and the calculating module 803 as shown in FIG. 8.

It can be understood that the structure shown in this embodiment does not constitute a limitation on the electronic device 101. In other embodiments, the electronic device 101 may include more or fewer components than shown in FIG. 9, or combine some components, or separate some components, or arrange different components. For example, the electronic device 101 may further include input-output devices, network access devices, buses, etc.

The processor 30 can be a Central Processing Unit (CPU), or other general-purpose processors, Digital Signal Processors (DSP), Application Specific Integrated Circuits (ASIC), Field-Programmable Gate Arrays (FPGA), or other programmable logic devices, discrete gate or transistor logic devices, discrete hardware components, etc. The general-purpose processor can be a microprocessor, a single-chip microcomputer, or the processor 30 can also be any conventional processors.

The storage medium 20 can be configured to store the computer program 40 and/or modules/units. By running or executing the computer program and/or modules/units stored in the storage medium 20 and calling the data stored in the storage medium 20, the processor 30 can implement various functions of the electronic device 101. The storage medium 20 can mainly include a program storage area and a data storage area. The program storage area can store an operating system, application programs required for at least one function (such as a sound playback function, an image display function), etc. The data storage area can store data created according to the use of the electronic device 101 (such as audio data), etc. In addition, the storage medium 20 can include high-speed random access storage medium and non-volatile storage medium, such as hard disks, internal storage medium, plug-in hard disks, Smart Media Cards (SMCs), Secure Digital (SD) cards, Flash Cards, at least one magnetic disk storage device, flash storage medium device, or other non-volatile solid-state storage devices.

If integrated modules/units of the electronic device 101 are implemented in the form of software functional units and sold or used as independent products, they can be stored in a computer-readable storage medium. Based on this understanding, to implement all or part of the processes in the methods of the above embodiments in this application, relevant hardware can also be instructed by a computer program. The computer program can be stored in a computer-readable storage medium. When the computer program is executed by the processor, the blocks of the above method embodiments can be implemented. The computer program includes computer program code, which can be in a form of source code, object code, executable files, or some intermediate forms. The computer-readable medium can include any entity or device capable of carrying the computer program code, recording media, USB flash drives, mobile hard disks, magnetic disks, optical disks, computer memories, Read-Only Memories (ROMs), Random Access Memories (RAMs), electrical carrier signals, telecommunication signals, and software distribution media. It should be noted that the content included in the computer-readable medium can be appropriately increased or decreased according to the requirements of legislation and patent practice in the jurisdiction. For example, in some jurisdictions, according to legislation and patent practice, the computer-readable medium does not include electrical carrier signals and telecommunication signals.

In some embodiments provided in this application, it should be understood that the disclosed electronic device 101 and method can be implemented in other ways. For example, the above-described embodiment of the electronic device 101 is merely illustrative. For example, the division of the units is only a logical functional division, and there can be other division methods in actual implementation.

In addition, the functional units in the various embodiments of this application can be integrated into the same processing unit, or each unit can physically exist independently, or two or more units can be integrated into the same unit. The above integrated units can be implemented in a form of hardware or in a form of hardware plus software functional modules.

For those skilled in the art, it is obvious that this application is not limited to the details of the above exemplary embodiments, and can be implemented in other specific forms without departing from the spirit or basic features of this application. Therefore, from any aspect, the embodiments should be regarded as exemplary and non-limiting. In addition, it is obvious that the word "comprising" or "including" does not exclude other units or steps, and the singular does not exclude the plural. Multiple units or electronic devices stated in the claims of the electronic device 101 can also be implemented by the same unit or through software or hardware. Words such as "first" and "second" are used to represent names and do not represent any specific order.

Finally, it should be noted that the above embodiments are only used to illustrate the technical solutions of this application and not to limit them. Although this application has been described in detail with reference to the above embodiments, those of ordinary skill in the art should understand that they can modify or equivalently replace the technical solutions of this application without departing from the spirit and scope of the technical solutions of this application.

**Claims**

1. An ice coating thickness detection method, **characterized in that**, the method comprises:

    acquiring an ice coating image of a power transmission line;
    inputting the ice coating image into a pre-trained ice coating semantic extraction model to obtain ice coating semantic information of the power transmission line;
    determining an ice coating contour of the power transmission line according to the ice coating semantic information; and
    determining an ice coating thickness of the power transmission line according to the ice coating contour.

2. The ice coating thickness detection method as claimed in claim 1, **characterized in that**, the ice coating semantic extraction model comprises a meteorological analysis model and a semantic segmentation model, inputting the ice coating image into a pre-trained ice coating semantic extraction model to obtain ice coating semantic information of the power transmission line comprises:

    acquiring micro-meteorological data matching with a capture time of the ice coating image;

    inputting the micro-meteorological data into the meteorological analysis model to obtain weather information at the time when the ice coating image was captured;
    detecting whether the weather information at the time when the ice coating image was captured meets an ice coating meteorological condition; and
    inputting the ice coating image into the semantic segmentation model to obtain the ice coating semantic information of the power transmission line when the weather information meets the ice coating meteorological condition.

3. The ice coating thickness detection method as claimed in claim 2, **characterized in that**, training methods of the ice coating semantic extraction model comprise:

    acquiring ice coating image samples and micro-meteorological data samples;
    obtaining a first loss function value corresponding to a current semantic segmentation model according the ice coating image samples and the current semantic segmentation model;
    obtaining a second loss function value corresponding to a current meteorological analysis model according to the micro-meteorological data samples and the current meteorological analysis model;
    obtaining a total loss function value of the ice coating semantic extraction model according to the first loss function value and the second loss function value;
    adjusting model parameters of the current semantic segmentation model and the current meteorological analysis model to obtain an adjusted ice coating semantic extraction model when the ice coating semantic extraction model is determined to be not converged according to the total loss function value; and
    continuing to train the adjusted ice coating semantic extraction model until the ice coating semantic extraction model converges.

4. The ice coating thickness detection method as claimed in any one of claims 1-3, **characterized in that**, the ice coating semantic extraction model comprises a first feature pyramid and a second feature pyramid;

    the first feature pyramid is configured for performing multiple downsampling operations on the ice coating image to obtain a first matrix; and
    the second feature pyramid is configured for performing multiple upsampling operations on the first matrix to obtain the ice coating semantic information.

5. The ice coating thickness detection method as claimed in any one of claims 1-4, **characterized in that**, the ice coating contour comprises a first contour line and a second contour line along the power transmission line, and determining the ice coating thickness of the power transmission line according to the ice coating contour comprises:

searching for a first position on the first contour line and a second position on the second contour line, wherein a distance between the first position and the second position is a shortest distance between the first contour line and the second contour line;
determining an ice coating diameter of the power transmission line according to the first position and the second position; and
determining the ice coating thickness according to the ice coating diameter and a diameter of the power transmission line.

6. The ice coating thickness detection method as claimed in claim 5, **characterized in that**, determining the ice coating diameter of the power transmission line according to the first position and the second position comprises:

obtaining a first adjacent point set, wherein the first adjacent point set comprises the first position and a plurality of positions adjacent to the first position on the first contour line;
calculating shortest distances between each position of the first adjacent point set and the second contour line to obtain a plurality of distance values; and
determining the ice coating diameter of the power transmission line according to the plurality of distance values.

7. The ice coating thickness detection method as claimed in any of claims 1-6, **characterized in that**, determining the ice coating contour of the power transmission line according to the ice coating semantic information comprises:

performing a binarization processing on the ice coating semantic information to obtain a binarized image; and
extracting the ice coating contour of the power transmission line from the binarized image.

8. An ice coating thickness detection apparatus, **characterized in that**, the apparatus comprises:

an acquiring module configured for acquiring an ice coating image of a power transmission line;
an extracting module configured for inputting the ice coating image into a pre-trained ice coating semantic extraction model to obtain ice coating semantic information of the power transmission line; and
a calculating module configured for determining an ice coating contour of the power transmission line according to the ice coating semantic information, and determining an ice coating thickness of the power transmission line according to the ice coating contour.

9. An electronic device comprising a processor and a storage medium, **characterized in that**, the storage medium is configured to store instructions, the processor is configured to call the instructions stored in the storage medium, to cause the electronic device to execute the ice coating thickness detection method according to any one of claims 1 to 7.

10. A computer-readable storage medium **characterized in that**, the computer-readable storage medium stores computer instructions, when the computer instructions run on an electronic device, the electronic device is caused to execute the ice coating thickness detection method according to any one of claims 1 to 7.

11. A computer program product, **characterized in that**, the computer program product comprises a computer program, when the computer program is executed by a processor, the ice coating thickness detection method according to any one of claims 1 to 7 is implemented.

**FIG. 1**

An ice coating image of a power transmission line is acquired 201

The ice coating image is inputted into a pre-trained ice coating semantic extraction model to obtain ice coating semantic information of the power transmission line 202

The ice coating contour of the power transmission line is determined according to the ice coating semantic information 203

The ice coating thickness of the power transmission line is determined according to the ice coating contour 204

**FIG. 2**

Ice coating image a×b → Convolution layer (a/n1)×(b/n1) → Maximum pooling layer → Convolution layer (a/n2)×(b/n2) → Maximum pooling layer → Convolution layer (a/n3)×(b/n3) → Maximum pooling layer → Convolution layer (a/n4)×(b/n4) → Maximum pooling layer → Convolution layer (a/n3)×(b/n3) → Maximum pooling layer → Convolution layer (a/n2)×(b/n2) → Maximum pooling layer → Convolution layer (a/n1)×(b/n1) → Maximum pooling layer → Output

301

302

. FIG. 3

**FIG. 4**

Ice coating image samples and micro-meteorological data samples are obtained — 501

↓

A first loss function value corresponding to the current semantic segmentation model is obtained according to the ice coating image samples and the current semantic segmentation model — 502

↓

A second loss function value corresponding to the current meteorological analysis model is obtained according to the micro-meteorological data samples and the current meteorological analysis model — 503

↓

A total loss function value of the ice coating semantic extraction model is obtained according to the first loss function value and the second loss function value — 504

↓

If the ice coating semantic extraction model is determined to be not converged according to the total loss function value, model parameters of the current semantic segmentation model and the current meteorological analysis model are adjusted to obtain an adjusted ice coating semantic extraction model — 505

↓

The adjusted ice coating semantic extraction model is continued to train until the ice coating semantic extraction model converges — 506

**FIG. 5**

**FIG. 6**

A first position on the first contour line and a second position on the second contour line are searched — 7011

A first adjacent point set is obtained — 7012

The shortest distances between each position in the first adjacent point set and the second contour line are calculated to obtain a plurality of distance values — 7013

The ice coating diameter is determined according to the plurality of distance values — 7014

The ice coating thickness is determined according to the ice coating diameter and a diameter of the power transmission line — 702

**FIG. 7**

Acquiring module 801

Extraction module 802

Calculating module 803

**FIG. 8**

101

Storage medium 20

Computer program 40

Processor 30

**FIG. 9**

<div align="center">**INTERNATIONAL SEARCH REPORT**</div>

| International application No. |
| --- |
| **PCT/CN2024/103071** |

**A.    CLASSIFICATION OF SUBJECT MATTER**

G06T7/73(2017.01)i

According to International Patent Classification (IPC) or to both national classification and IPC

**B.    FIELDS SEARCHED**

Minimum documentation searched (classification system followed by classification symbols)

IPC: G06T

Documentation searched other than minimum documentation to the extent that such documents are included in the fields searched

Electronic data base consulted during the international search (name of data base and, where practicable, search terms used)

CNABS, CNTXT, VEN, EPTXT, WOTXT, CNKI, IEEE: 电线, 覆冰, 图像, 模型, 语义, 轮廓, 厚度, 气象, 天气, 温度, 训练, wire, icing, model, semantics, outline, thickness, meteorogogy, weather, train

**C.    DOCUMENTS CONSIDERED TO BE RELEVANT**

| Category* | Citation of document, with indication, where appropriate, of the relevant passages | Relevant to claim No. |
| --- | --- | --- |
| PX | CN 117495954 A (ZHONGTIAN POWER OPTICAL CABLE CO., LTD. et al.) 02 February 2024 (2024-02-02) claims 1-10, and description, paragraphs [0005]-[0169] | 1-11 |
| X | CN 114998243 A (SHANGHAI BEACON INTELLIGENT TECHNOLOGY CO., LTD.) 02 September 2022 (2022-09-02) description, paragraphs [0022]-[0058] | 1-11 |
| X | CN 112595276 A (HARBIN ENGINEERING UNIVERSITY) 02 April 2021 (2021-04-02) description, paragraphs [0015]-[0038] | 1-11 |
| A | CN 103453867 A (STATE GRID CORPORATION OF CHINA et al.) 18 December 2013 (2013-12-18) entire document | 1-11 |
| A | CN 113609898 A (SISHUI POWER SUPPLY COMPANY OF STATE GRID SHANDONG ELECTRIC POWER COMPANY et al.) 05 November 2021 (2021-11-05) entire document | 1-11 |
| A | CN 114049296 A (XJ GROUP CORP. et al.) 15 February 2022 (2022-02-15) entire document | 1-11 |

☑ Further documents are listed in the continuation of Box C.          ☑ See patent family annex.

| \* | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **23 September 2024** | **08 October 2024** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**EP 4 597 412 A1**

**INTERNATIONAL SEARCH REPORT**

International application No.

**PCT/CN2024/103071**

C.    DOCUMENTS CONSIDERED TO BE RELEVANT

| Category* | Citation of document, with indication, where appropriate, of the relevant passages | Relevant to claim No. |
|---|---|---|
| A | US 2014067271 A1 (INTERNATIONAL BUSINESS MACHINES CORP.) 06 March 2014 (2014-03-06)<br>    entire document | 1-11 |

Form PCT/ISA/210 (second sheet) (July 2022)

20

## INTERNATIONAL SEARCH REPORT
### Information on patent family members

| International application No. |
| --- |
| **PCT/CN2024/103071** |

| Patent document cited in search report | | | Publication date (day/month/year) | Patent family member(s) | | | Publication date (day/month/year) |
| --- | --- | --- | --- | --- | --- | --- | --- |
| CN | 117495954 | A | 02 February 2024 | None | | | |
| CN | 114998243 | A | 02 September 2022 | None | | | |
| CN | 112595276 | A | 02 April 2021 | None | | | |
| CN | 103453867 | A | 18 December 2013 | None | | | |
| CN | 113609898 | A | 05 November 2021 | None | | | |
| CN | 114049296 | A | 15 February 2022 | None | | | |
| US | 2014067271 | A1 | 06 March 2014 | US | 10386542 | B2 | 20 August 2019 |

Form PCT/ISA/210 (patent family annex) (July 2022)

**REFERENCES CITED IN THE DESCRIPTION**

**Patent documents cited in the description**

• CN 202311316210